# EUROPEAN PATENT SPECIFICATION

(11) **EP 3 235 687 B1**
(45) Date of publication and mention of the grant of the patent: **28.11.2018**
(21) Application number: 17000489.9
(22) Date of filing: 23.03.2017
(51) Int. Cl.: B60R 9/06, B60R 9/10, B60P 3/07, B60P 3/12, B60P 1/44

(54) **MOTORCYCLE CARRIER**
MOTORRADTRÄGER
SUPPORT DE MOTOCYCLETTE

(30) Priority: 22.04.2016 IT UA20162842
(43) Date of publication of application: 25.10.2017
(73) Proprietor: Barca, Ezio, 10146 Torino (IT)
(72) Inventor: Barca, Ezio, 10146 Torino (IT)
(74) Representative: Garavelli, Paolo

(56) References cited:
- EP-A1- 2 374 664
- DE-U1-202005 001 008
- FR-A1- 2 939 380
- US-A- 3 754 672
- US-A1- 2003 099 531

## Description

The present invention refers to a coupling device adapted to house a motorcycle in order to be able to fasten it to a wall, both for placing it in a garage, and for transporting it with a camper.

There are in the market various devices suitable to fasten a motorcycle to a wall, for example to the rear wall of a camper to be able to carry therewith a practical means of transport to be used for local movements. This need is so felt that, in campers with bigger sizes, a big rear baggage compartment is sometimes present, suitable for the transport, in addition to baggage, also of at least one motorcycles or a scooter.

These known devices however have a severe inconvenience, since they do not allow easily lifting the motorcycle. This is not a severe inconvenience if a bicycle has to be transported, since this latter one, being lightweight, can be easily lifted by the user, but becomes unsustainable in case of a motorcycle due to its rather more relevant weight, also in case of models with a small displacement. In practice, it then happens that the known models allow only moderate liftings, operating through levers on a supporting bar in which the motorcycle wheels are abutted. Not being able to lift the motorcycle above the number plate or the rear lights of the camper, they remain covered, creating obvious problems for a user.

In case of use in a garage, it is particularly useful to be able to lift the motorcycle by an amount enough to allow parking a car near the wall, in order to be able to recover both vehicles in the same garage. It is clear that, though with some problem, the transport on the rear wall of a camper is possible, while it is not reasonable to hang the motorcycle to the wall in case of recovery in a garage, since the necessary lifting becomes rather more relevant.

A coupling device according to the preamble of claim 1 is known from the document US3754672.

The present invention solves the proposed problem through a coupling device, according to claim 1.

According to the invention, the length variation of the frame is obtained through the use of tubes, integral with the upper part of the frame, adapted to be telescopically inserted into tubes integral with the lower part of the frame, the manoeuvre being performed through a winch integral with the upper part of the frame, the winch being able to be actuated manually or through a small electric motor.

The supporting means can advantageously be made descend at ground level, so that the motorcycle can be arranged rather easily above them and fastened to the frame of the coupling device.

In practice, the user arranges the motorcycle on the supporting means, fastens it to the frame of the motorcycle carrier and then lifts it at the desired height, making number plate and rear lights of the camper visible. In case of use in a garage, it will be convenient to apply the motorcycle carrier of the invention to the wall against which the front part of the vehicle which has to be recovered in the same garage is abutted, since it is enough to lift the motorcycle above the engine hood, in order to completely use the available space, as if the motor vehicle is not present in the garage.

The invention will now be described, as a non-limiting example, according to a preferred embodiment and with reference to the enclosed figures, wherein:
- Figures 1, 2 and 3 show a device according to the invention in three different configurations during its use;
- Figure 4 shows the lifting mechanism;
- Figure 5 shows the device of the invention applied to the rear wall of a camper, with a scooter assembled thereon.

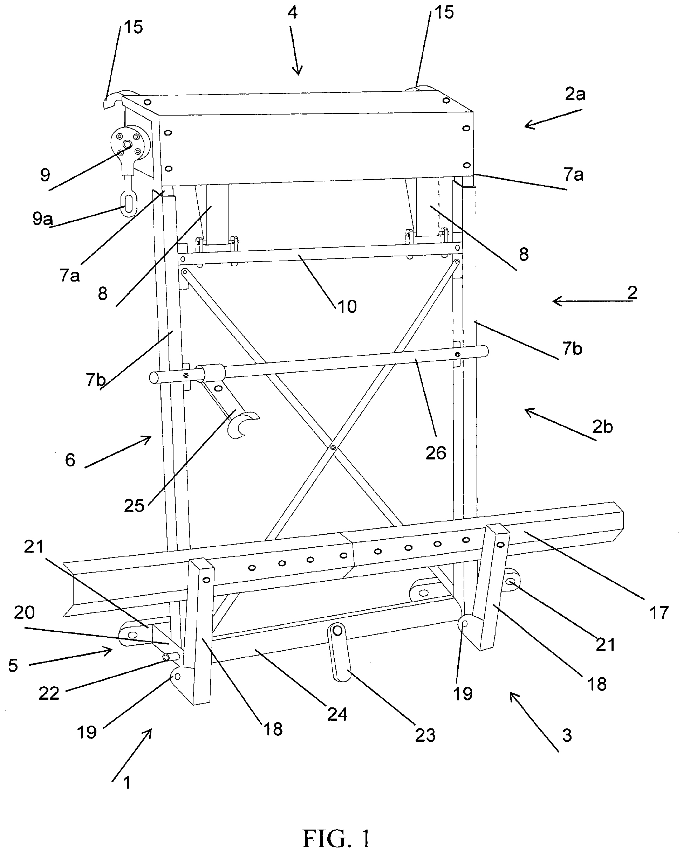

With reference to Figures 1, 2 and 3, (1) designates a device motorcycle carrier according to the invention. According to the invention, the device (1) comprises:
- a frame (2) made of two parts: an upper part (2a), to be fastened to a wall, and a lower part (2b), sliding with respect to the upper part (2a) and comprising supporting means (3), on which the wheels of the motorcycle are abutted;
- lifting means (4), integral with the upper part (2a) of the frame (2), adapted to vertically slide the lower part (2b) of the frame (2) with respect to the upper part (2a) of the frame (2), in order to lift or lower a motorcycle arranged on the supporting means (3).

The following are then advantageously provided:
- first fastening means (5), adapted to make the device (1) integral with the wall to which it is applied;
- second fastening means (6), adapted to fasten the motorcycle to the lower part (2b) of the frame (2), when it is present on the supporting means (3);
the first and second fastening means being useful in case of application of the device (1) to the wall of a garage and indispensable in case of transport on the rear wall of a camper.

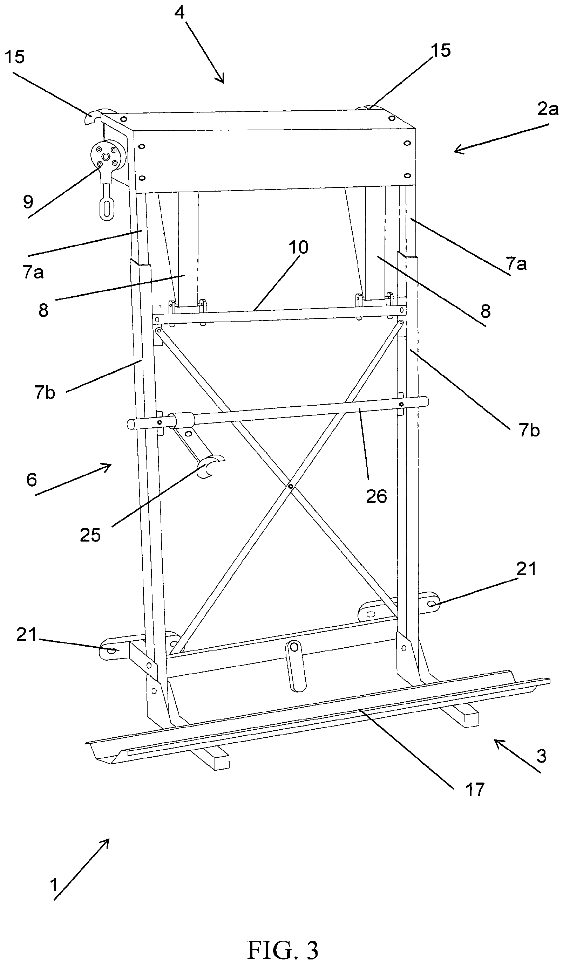

According to the invention, the mutual sliding of the two parts (2a) and (2b) of the frame (2) is obtained through a pair of first tubes (7a), (Fig. 3) of the upper part (2a) of the frame (2), which are telescopically inserted in as many second tubes (7b) of the lower part (2b) of the frame (2), so that the mutual sliding of the first tubes (7a) inside the second tubes (7b) generates a length variation of the frame (2), the sliding being generated by the lifting means (4). The shortening of the frame (2) will generate the lifting of the motorcycle, while the elongation of the frame (2) will generate the lowering of the motorcycle.

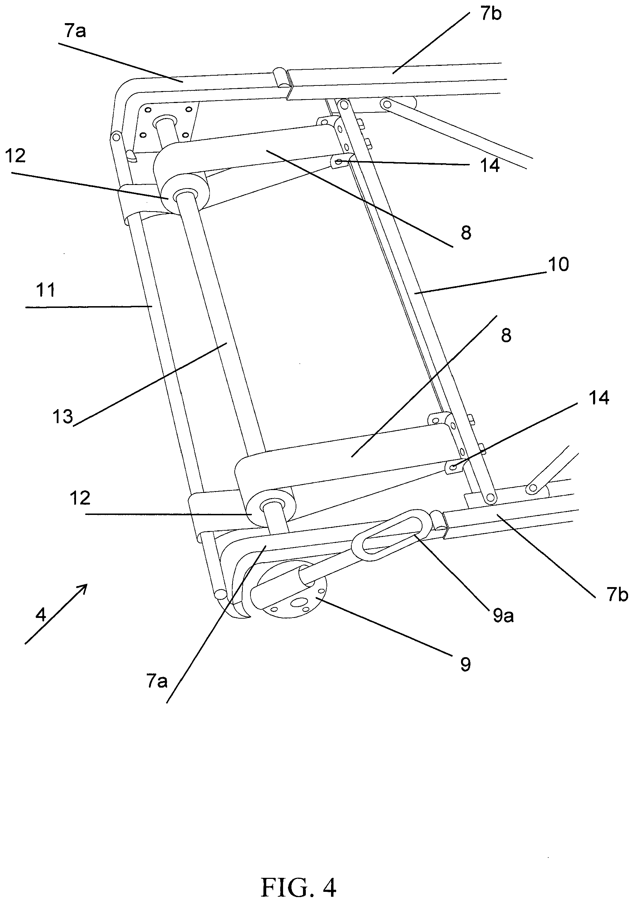

According to a preferred embodiment, shown in detail in Figure 4, the lifting means (4) comprise a winch composed of a pair of belts (8) which, actuated through a squared transmission (9), operate on a cross member (10) integral with the second tubes (7b), so that the traction on the cross member (10) generates the insertion of the first tubes (7a), integral with the lifting means (4), in the second tubes (7b) and, then, the shortening of the frame (2). The squared transmission (9) is preferably equipped with an eyelet (9a) which allows its comfortable actuation through a rod equipped with hook and handle, according to the known art.

According to a preferred embodiment, the lifting means (4) comprise the pair of belts (8), which are fastened, with a first end, to a bar (11) integral with the first tubes (7a) and, with a second end, to a pair of pulleys (12) assembled on a rod (13), rotating around its own axis and actuated by the squared transmission (9). The due belts (8) are also passed around a pair of pins (14), integral with the bar (10) which, in turn, is integral with the second tubes (7b). It follows that, by rotating the pulleys (12), through the squared transmission (9), the belts (8) are wound onto the pulleys (12) exerting a traction action on the pins (14), and then, through the cross member (10), on the tubes (7b), generating the shortening of the frame (2) and the lifting of the motorcycle.

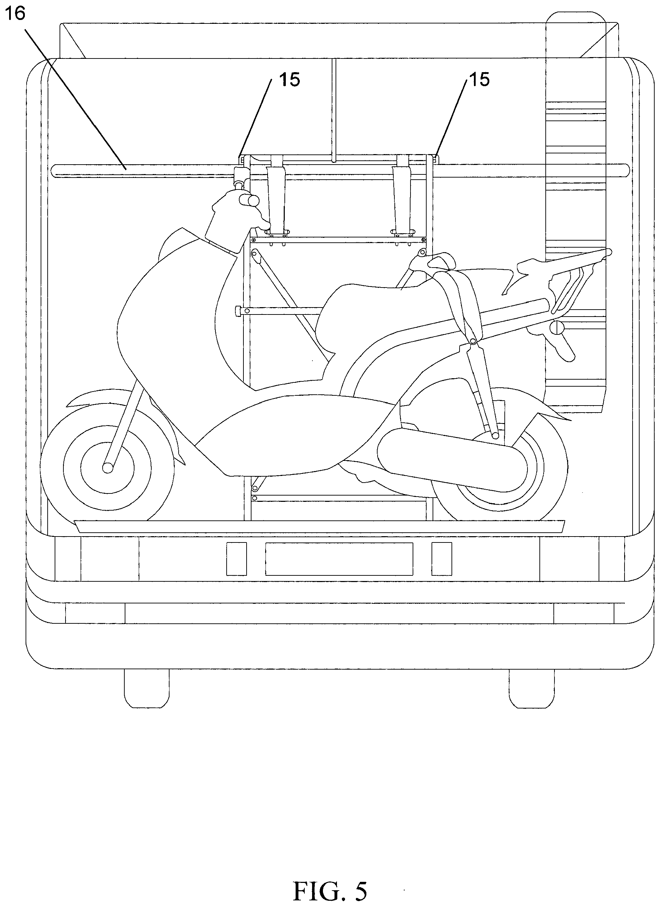

According to a preferred embodiment, the upper part of the first tubes (7a) is bent in order to make a pair of hooks (15) suitable to fasten the device (1) to a horizontal bar (16), applied to the rear wall of a camper (Figure 5), or to the wall of a garage.

The supporting means (3) comprise a shaped bar (17) suitable to house the motorcycle wheels, the bar being assembled on a pair of shelves (18), preferably oscillating around a horizontal pin (19), in order to be able to lift the shaped bar (17), to reduce the encumbrance of the device motorcycle carrier (1) when it is not in use.

In order to improve the stability of the device (1), above all in case of use on the rear wall of a camper, the use of the first fastening means (5) is provided, adapted to make the device (1) integral with the wall to which it is applied. The first fastening means (5) comprise brackets (20), equipped with a flange (21) to be applied to the wall, for example through screws, and a pair of sliding pins (22), actuated by a handle (23), which are inserted into suitable holes obtained in the brackets (20), blocking the lower part of the frame (2), the pins (22) being sliding inside a cross member (24) integral with the lower part (2b) of the frame (2). The second tubes (7b) of the frame (2) longitudinally slide with respect to the brackets (20), and the pins (22) can be inserted in the holes of the brackets (20) only when the frame is in its shortened configuration, namely when the motorcycle is lifted, or when the device (1) is not in use.

The second fastening means (6) comprise catching means (25), of a known type, adapted to catch a part of the motorcycle to be transported, the catching means (25) being fastened to the lower part (2b) of the frame (2), for example to a bar (26) integral with the second tubes (7b) .

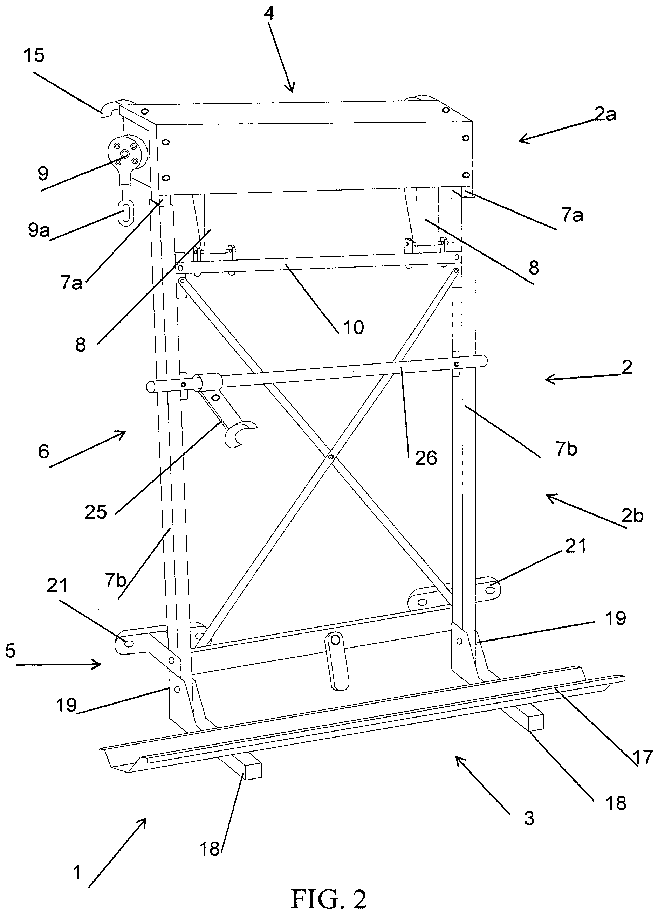

The operation of the device motorcycle carrier (1) is as follows:
- starting from the configuration shown in Figure 1, where the shaped bar (17) is lifted, the oscillating shelves (18) are rotated in order to lower the shaped bar (17) (Figure 2);
- through the lever (23) the pins (22) are extracted from the brackets (20), unlocking the lower part of the frame (2);
- operating on the lifting mechanism (4) through the squared transmission (9), the lower part (2b) of the frame (2) is lowered, in order to take the shaped bar (17) at ground level, to allow easily loading the motorcycle (Figure 3);
- after having fastened the motorcycle to the lower part (2b) of the frame (2), through said second fastening means (6), the lifting mechanism (4) is again actuated through the squared transmission (9) and the motorcycle is lifted;
- after having reached the upper position, by operating on the leva (23), the pins (22) are again inserted in the holes of the brackets (20), thereby blocking the lower part (2b) of the frame (2) with respect to the wall.

In order to unload the motorcycle from the device motorcycle carrier (1), the described operations are performed in a contrary way and the operation ends by lifting the bar (17).

As clearly appears from the previous description, the use of the device motorcycle carrier (1) of the invention allows easily arranging a motorcycle on a wall, in an enough high position as not to impair reading the nameplated or viewing the rear lights, in case of arrangement on the rear wall of a camper (Figure 5), or to allow the simultaneous recovery of a car in the same garage.

The invention has been described as a non-limiting example. The skilled person will devise numerous other embodiments, all falling within the scope of the invention as appears from the enclosed claims.

## Claims

1. Coupling device (1) adapted to couple a motorcycle to a vertical wall, of the type comprising a frame (2) to be coupled with said wall, supporting means (3), adapted to house said motorcycle and lifting means (4), integral with said frame (2), adapted to lift said supporting means (3), said frame (2) being made of two parts: an upper part (2a), adapted to be fastened to said wall, and a lower part (2b), sliding with respect to said upper part (2a) and integral with said supporting means (3), said lifting means (4) operating between said upper part (2a) of the frame (2) and said lower part (2b) of the frame (2) in such a way as to generate:
- a length reduction of said frame (2), for lifting said motorcycle;
- a length increase of said frame (2), for lowering said motorcycle;
wherein said lifting means (4), adapted to lift said supporting means (3), comprise a winch fastened to said upper part (2a) of said frame (2), adapted to exert a traction on said lower part (2b) of said frame (2);
**characterized in that** said length variation of said frame (2) is obtained through the use of first tubes (7a), integral with said upper part (2a) of said frame (2), adapted to be telescopically inserted into second tubes (7b), integral with said lower part (2b) of said frame (2) said winch (4) comprising at least one belt (8) fastened, with a first end, to a bar (11) integral with said upper part (2a) of the frame (2) and, with a second end, to a pulley (12) assembled on a rod (13), rotating around its own axis, said at least one belt (8) passing around a pin (14), integral with a bar (10) which, in turn, is integral with said lower part (2b) of the frame (2), so that, by rotating said pulley (12), said at least one belt (8) is wound onto said pulley (12) exerting a traction action on said pin (14) and then, through said cross member (10), on the second tubes (7b), generating the shortening of the frame (2) and the lifting of the motorcycle.

2. Coupling device (1) according to claim 1, **characterized in that** said rod (13), rotating around its own axis, is actuated through a squared transmission (9).

3. Coupling device (1) according to claim 1, **characterized in that** said rod (13), rotating around its own axis, is actuated by a small electric motor.

4. Coupling device (1) according to claim 1, **characterized in that** said supporting means (3) comprise a shaped bar (17) suitable to house the wheels of the motorcycle, said bar being assembled on a pair of shelves (18) .

5. Coupling device (1) according to claim 4, **characterized in that** said shelves (18) are oscillating around a horizontal pin (19), in order to be able to lift said shaped bar (17), reducing the encumbrance of the coupling device (1) when it is not in use.

6. Coupling device (1) according to any one of claims 1 to 5, **characterized in that** it has first fastening means (5), adapted to make said device (1) integral with the wall to which it is applied.

7. Coupling device (1) according to claim 6, **characterized in that** said first fastening means (5) comprise brackets (20), equipped with flanges (21), to be applied to said wall, and a pair of sliding pins (22), actuated by a handle (23), which are inserted into suitable holes obtained in said brackets (20), blocking the lower part (2a) of the frame (2), said pins (22) being sliding inside a cross member (24) integral with the lower part (2b) of said frame (2).

8. Coupling device (1) according to claim 7, **characterized in that** said pins (22) can be inserted in the holes of the brackets (20) only when the frame (2a) is in its shortened configuration, namely when the motorcycle is lifted, or when the device (1) is not in use.

## Patentansprüche

1. Befestigungsvorrichtung (1), die dazu dient, ein Motorrad an einer vertikalen Wand zu befestigen, mit einem Rahmen (2), der an der genannten Wand befestigt wird, Halterungsvorrichtungen (3), die dazu dienen, das genannte Motorrad aufzunehmen, und Hebevorrichtungen (4), die einteilig mit dem genannten Rahmen (2) sind, welche dazu dienen, die genannten Hebevorrichtungen (3) anzuheben, der genannte Rahmen (2) ist aus zwei Teilen hergestellt: Ein oberer Teil (2a), der dazu dient, an der genannten Wand befestigt zu werden, und ein unterer Teil (2b), der gegenüber dem genannten oberen Teil (2a) verschiebbar ist und einteilig mit den genannten Halterungsvorrichtungen (3) ist, die genannten Hebevorrichtungen (4) wirken zwischen dem genannten oberen Teil (2a) des Rahmens (2) und dem genannten unteren Teil (2b) des Rahmens (2), um Folgendes zu bewirken:
- eine Längenreduzierung des genannten Rahmens (2) zum Anheben des genannten Motorrades;
- eine Längenerhöhung des genannten Rahmens (2) zum Senken des genannten Motorrades;
wobei die genannten Hebevorrichtungen (4), die dazu dienen, die genannten Halterungsvorrichtungen (3) anzuheben, eine Winde enthalten, die am genannten oberen Teil (2a) des genannten Rahmens (2) befestigt ist, welche dazu dient, eine Traktion am genannten unteren Teil (2b) des genannten Rahmens auszuüben;
und **dadurch gekennzeichnet ist, dass** die genannte Längenänderung des genannten Rahmens (2) durch die Verwendung von ersten Rohren (7a) erhalten wird, die einteilig mit dem genannten oberen Teil (2a) des genannten Rahmens (2) sind, welche dazu dienen, sich teleskopisch in zweite Rohre (7b) einzuführen, die einteilig mit dem genannten unteren Teil (2b) des genannten Rahmens (2) sind, die genannte Winde (4) enthält mindestens einen Gurt (8), der mit einem ersten Ende an einer Stange (11), die einteilig mit dem genannten oberen Teil (2a) des Rahmens (2) ist, und mit einem zweiten Ende an einer Riemenscheibe (12), die an einem Stab (13) montiert ist, der sich um seine eigene Achse dreht, befestigt ist, der genannte mindestens eine Gurt (8) verläuft um einen Bolzen (14), der einteilig mit einer Stange (10) ist, die ihrerseits einteilig mit dem genannten unteren Teil (2b) des Rahmens (2) ist, sodass sich, indem die genannte Riemenscheibe (12) in Drehung versetzt wird, der genannte mindestens eine Gurt (8) auf der genannten Riemenscheibe (12) aufrollt und eine Traktionswirkung auf den genannten Bolzen (14) und daher durch die genannten Traverse (10) auf die genannten zweiten Rohre (7b) ausübt, und die Verkürzung des Rahmens (2) und das Heben des Motorrades veranlasst.

2. Befestigungsvorrichtung (1) gemäß Patentanspruch 1, die **dadurch gekennzeichnet ist, dass** der genannte Stab (13), der sich um seine eigene Achse dreht, durch ein Winkelgetriebe (9) angetrieben wird.

3. Befestigungsvorrichtung (1) gemäß Patentanspruch 1, die **dadurch gekennzeichnet ist, dass** der genannte Stab (13), der sich um seine eigene Achse dreht, durch einen kleinen Elektromotor angetrieben wird.

4. Befestigungsvorrichtung (1) gemäß Patentanspruch 1, die **dadurch gekennzeichnet ist, dass** die genannten Halterungsvorrichtungen (3) eine Formstange (17) enthalten, die dazu geeignet ist, die Räder des Motorrades aufzunehmen, die genannte Stange wird auf einem Konsolenpaar (18) montiert.

5. Befestigungsvorrichtung (1) gemäß Patentanspruch 1, die **dadurch gekennzeichnet ist, dass** die genannten Konsolen (18) um einen horizontalen Bolzen (19) schwingen, um die genannte Formstange (17) anheben zu können und den Platzbedarf der Befestigungsvorrichtung (1) zu reduzieren, wenn diese nicht verwendet wird.

6. Befestigungsvorrichtung (1) gemäß einem beliebigen der Patentansprüche von 1 bis 5, die **dadurch gekennzeichnet ist, dass** sie erste Fixiermittel (5) vorsieht, die dazu dienen, die genannte Vorrichtung (1) einteilig mit einer Wand zu machen, an der sie angebracht ist.

7. Befestigungsvorrichtung (1) gemäß Patentanspruch 6, die **dadurch gekennzeichnet ist, dass** die genannten ersten Fixiermittel (5) Bügel (20) enthalten, die mit Flanschen (21), welche an der genannten Wand angebracht werden, sowie mit einem Paar Schiebebolzen (22), die durch einen Griff (23) angetrieben werden, versehen sind, welche sich in die entsprechenden Bohrungen einführen, die an den genannten Bügeln (20) erhalten wurden, und den unteren Teil (2a) des Rahmens (2) blockieren, die genannten Bolzen (22) sind in einer Traverse (24) verschiebbar, die einteilig mit dem unteren Teil (2b) des genannten Rahmens (2) ist.

8. Befestigungsvorrichtung (1) gemäß Patentanspruch 7, die **dadurch gekennzeichnet ist, dass** sich die genannten Bolzen (22) nur in die Bohrungen der Bügel (20) einführen können, wenn der Rahmen (2a) in der verkürzten Konfiguration ist, d. h. wenn das Motorrad angehoben ist, oder wenn die Vorrichtung (1) nicht verwendet wird.

## Revendications

1. Dispositif d'attelage (1) apte à accrocher une motocyclette à une paroi verticale, du type comprenant un cadre (2) à accrocher à la paroi, des moyens de support (3) aptes à accueillir la motocyclette et des moyens de levage (4), solidaires du cadre (2), aptes à soulever les moyens de support (3) ; le cadre (2) est réalisé en deux parties : une partie supérieure (2a), apte à être fixée à la paroi et une partie inférieure (2b), coulissante par rapport à la partie supérieure (2a) et solidaire des moyens de support (3) ; les moyens de levage (4) agissent entre la partie supérieure (2a) du cadre (2) et la partie inférieure (2b) du cadre (2) de sorte à provoquer :
- une réduction de longueur du cadre (2) pour soulever la motocyclette ;
- une augmentation de la longueur du cadre (2) pour baisser la motocyclette ;
où les moyens de levage (4), aptes à soulever les moyens de support (3), comprennent un treuil fixé à la partie supérieure (2a) du cadre (2), apte à exercer une traction sur la partie inférieure (2b) du cadre (2) ;
**caractérisé en ce que** la variation de longueur du cadre (2) est obtenue en utilisant des premiers tubes (7a), solidaires de la partie supérieure (2a) du cadre (2), aptes à s'insérer de manière télescopique dans des seconds tubes (7b), solidaires de la partie inférieure (2b) du cadre (2) ; le treuil (4) comprend au moins une courroie (8) fixée, avec une première extrémité, à une barre (11) solidaire de la partie supérieure (2a) du cadre (2) et, avec une seconde extrémité, à une poulie (12) montée sur une tige (13), tournant autour de son axe ; la courroie (8) passe autour d'un goujon (14), solidaire d'une barre (10) qui, à son tour, est solidaire de la partie inférieure (2b) du cadre (2), de sorte que, en mettant en rotation la poulie (12), une courroie (8) au moins s'enroule sur la poulie (12) en exerçant une action de traction sur le goujon (14) et par conséquent, par l'intermédiaire de la traverse (10), sur les secondes tubes (7b), ce qui provoque le raccourcissement du cadre (2) et le soulèvement de la motocyclette.

2. Dispositif d'attelage (1), selon la revendication 1, **caractérisé en ce que** la tige (13), tournant autour de son asse, est actionnée par un renvoi en équerre (9).

3. Dispositif d'attelage (1), selon la revendication 1, **caractérisé en ce que** la tige (13), tournant autour de son asse, est actionnée par un petit moteur électrique.

4. Dispositif d'attelage (1), selon la revendication 1, **caractérisé en ce que** les moyens de support (3) comprennent une barre profilée (17) servant à accueillir les roues de la motocyclette, la barre est montée sur une paire d'étagères (18).

5. Dispositif d'attelage (1), selon la revendication 4, **caractérisé en ce que** les étagères (18) oscillent autour d'un goujon horizontal (19), pour pouvoir soulever la barre profilée (17), ce qui réduit l'encombrement du dispositif d'attelage (1) quand il n'est pas utilisé.

6. Dispositif d'attelage (1) selon l'une des revendications de 1 à 5, **caractérisé en ce qu'**il prévoit des premiers moyens de fixation (5), aptes à rendre le dispositif (1) solidaire de la paroi sur laquelle il est appliqué.

7. Dispositif d'attelage (1), selon la revendication 6, **caractérisé en ce que** les premiers moyens de fixation (5) comprennent des étriers (20), dotés de brides (21), à appliquer à la paroi, et une paire de goujons coulissants (22), actionnés par une poignée (23), qui s'insèrent dans les trous creusés sur les étriers (20), en bloquant la partie inférieure (2a) du cadre (2) ; ces goujons (22) coulissent à l'intérieur d'une traverse (24) solidaire de la partie inférieure (2b) du cadre (2).

8. Dispositif d'attelage (1), selon la revendication 7, **caractérisé en ce que** les goujons (22) ne peuvent s'insérer dans les trous des étriers (20) que quand le cadre (2a) est en configuration raccourcie, à savoir quand la motocyclette est soulevée, ou quand le dispositif (1) n'est pas utilisé.
